(19) Europäisches Patentamt
European Patent Office
Office européen des brevets

(11) EP 2 779 792 A1

(12) EUROPEAN PATENT APPLICATION

(43) Date of publication:
17.09.2014 Bulletin 2014/38

(51) Int Cl.:
*H05B 33/08* (2006.01)    *F21V 9/10* (2006.01)
*G01J 1/42* (2006.01)    *H05B 37/02* (2006.01)

(21) Application number: 13181017.8

(22) Date of filing: 20.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.03.2013 JP 2013048385

(71) Applicant: Kabushiki Kaisha Toshiba
Tokyo 105-8001 (JP)

(72) Inventors:
• Koga, Shota
Tokyo 105-8001 (JP)
• Higashi, Hirokuni
Tokyo 105-8001 (JP)
• Ishiwata, Tomoko
Tokyo 105-8001 (JP)

(74) Representative: HOFFMANN EITLE
Patent- und Rechtsanwälte
Arabellastrasse 4
81925 München (DE)

(54) **Luminaire, and luminaire control method**

(57)    In a luminaire, a diffusing unit diffuses the light, which has been emitted from a light source unit, according to light transmissibility. A position information obtaining unit obtains position information which at least indicates the position of a person. A luminance obtaining unit obtains the luminance of a luminous part at the position specified in the position information. A calculating unit calculates, according to the light transmissibility and the luminance of the luminous part, a luminance uniformity ratio which indicates the uniformity in the luminance distribution in the luminous part at the position specified in the position information. According to the luminance and the luminance uniformity ratio, a control unit varies the light transmissibility and varies the light output of the light source unit.

- - -

FIG.2

EP 2 779 792 A1

**Description**

FIELD

Embodiments described herein relate generally to a luminaire and a luminaire control method.

BACKGROUND

If a high-luminance portion comes within the field of vision of an operator, then it results in a discomfort glare for that operator. Such a discomfort glare brings a psychologically unpleasant sensation to the operator thereby causing discomfort or difficulty in viewing. For that reason, in the past, a method has been specified to evaluate the discomfort glare based on the luminance of the luminous part of a luminaire. If the luminance of a luminaire is designed by following that method of evaluating the discomfort glare, it becomes possible to hold down the discomfort glare occurring with respect to the operator.

Meanwhile, in recent years, out of consideration to electrical power saving or out of consideration to the environment, luminaires having the conventional fluorescent lamps as the light sources are being widely replaced by LED luminaires having light emitting diodes (LEDs) as the light sources. Such an LED luminaire has an arrangement of a plurality of LEDs, each of which is a point light source. Hence, there are times when high-luminance portions are present locally. Because of that, the luminance distribution of a luminous part becomes uneven.

In the conventional method of evaluating the glare, no consideration is given to the luminaire such as an LED luminaire in which high-luminance portions are present locally on luminous parts. Hence, there is a possibility that evaluation is not done in an appropriate manner. In this case, for example, it may happen that the actual glare of the LED luminaire becomes stronger as compared to the glare evaluation performed based on the average luminance.

In order to hold down the glare in a more reliable manner, a diffuser having a high degree of diffusion can be installed against luminous parts. However, in the diffuser, there is a definite relationship between the degree of diffusion and light transmissibility. That is, greater the degree of diffusion of a diffuser, lower is the light transmissibility thereof. For that reason, in an LED luminaire in which a diffuser having a high degree of diffusion is installed against luminous parts; although the glare is held down, there occurs a decline in the lighting efficiency.

In that regard, it is an object of the invention to provide a luminaire and a luminaire control method such that, when high-luminance portions are present locally on a luminous part of the luminaire, it becomes possible to hold down the glare while preventing a decline in the lighting efficiency.

BRIEF DESCRIPTION OF THE DRAWINGS

FIGS. 1A and 1B are diagrams for giving the definition of terms;
FIG. 2 is a diagram that schematically illustrates an installation example of a luminaire;
FIGS. 3A and 3B are diagrams illustrating an example of luminance distribution in luminous parts of a luminaire;
FIG. 4 is a block diagram illustrating an exemplary configuration of a luminaire according to a first embodiment;
FIG. 5 is a diagram that schematically illustrates an installation example of the luminaire according to the first embodiment;
FIG. 6 is a diagram illustrating an exemplary diffuser control table according to the first embodiment;
FIG. 7 is a flowchart for explaining an exemplary lighting control operation according to the first embodiment;
FIG. 8 is a diagram illustrating an exemplary luminance limit value table according to the first embodiment;
FIG. 9 is a diagram illustrating an exemplary light source control table according to the first embodiment;
FIGS. 10A and 10B are diagrams illustrating exemplary luminance uniformity ratio tables according to the first embodiment;
FIG. 11 is a diagram illustrating an exemplary luminance uniformity ratio limit value table according to the first embodiment;
FIG. 12 is a flowchart for explaining an exemplary lighting control operation according to a modification example of the first embodiment;
FIG. 13 is a diagram illustrating an application example of the first embodiment and the modification example of the first embodiment;
FIG. 14 is a diagram illustrating an application example of the first embodiment and the modification example of the first embodiment;
FIG. 15 is a diagram illustrating an application example of the first embodiment and the modification example of the first embodiment;

FIG. 16 is a diagram illustrating an application example of the first embodiment and the modification example of the first embodiment;

FIG. 17 is a diagram illustrating another application example of the first embodiment and the modification example of the first embodiment;

FIG. 18 is a block diagram illustrating an exemplary configuration of the luminaire that can be implemented in the first embodiment and the modification example of the first embodiment; and

FIG. 19 is a block diagram illustrating an exemplary configuration of a luminaire according to a second embodiment.

DETAILED DESCRIPTION

Prior to giving the explanation of exemplary embodiments, the definition of terms is given. That is followed by the explanation of a luminaire according to the known technology.

Definition of terms

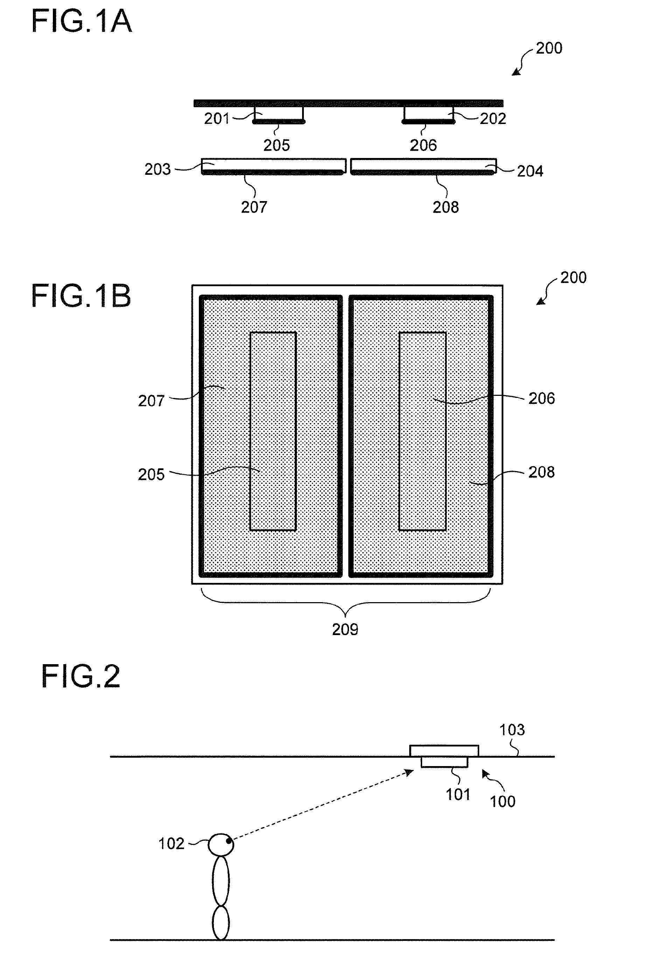

Firstly, the definition of terms is given with reference to FIGS. 1A and 1B. FIG. 1A is a cross-sectional view of a luminaire 200, and FIG. 1B is a front view of the luminaire 200. In the following explanation, the face from which a luminaire emits most of the light is called the front face of that luminaire. For example, when a luminaire is installed to the ceiling, then the face of the luminaire opposite to the floor is referred to as the front face.

With reference to FIGS. 1A and 1B, the luminaire 200 includes two light source units 201 and 202 each of which has a light source, as well as includes diffuser plates 203 and 204. The diffuser plate 203 diffuses the light emitted from the light source unit 201 so that the diffused light is thrown out to the outside of the luminaire 200. Similarly, the diffuser plate 204 diffuses the light emitted from the light source unit 202 so that the diffused light is thrown out to the outside of the luminaire 200.

With reference to FIGS. 1A and 1B; light-emitting portions, light-emitting faces, and luminous part are defined as the portions through which the light is emitted from a luminaire 200. A light-emitting portion is the portion from which the light is thrown out when a light source is placed in a dark place. In the example illustrated in FIGS. 1A and 1B, the surfaces of the light source units 201 and 202 are treated as light-emitting portions 205 and 206, respectively.

A light-emitting face is the portion from which the light is thrown out when one type of the light source unit and one type of the diffusing unit are placed in a dark place. In the example illustrated in FIGS. 1A and 1B, for example, regarding the light source unit 201 combined with the diffuser plate 203; that face of the diffuser plate 203 from which the light is thrown out and which is on the opposite side to the side of the light-emitting portion 205 is treated as a light-emitting face 207. In an identical manner, regarding the combination of the light source unit 202 and the diffuser plate 204; that face of the diffuser plate 204 which is on the opposite side to the side of the light-emitting portion 206 is treated as a light-emitting face 208.

A luminous part is the portion from which the light is thrown out when a luminaire is placed in a dark place. In the example illustrated in FIGS. 1A and 1B, a luminous part 209 includes the light-emitting faces 207 and 208. The light thrown out from a luminous part contains direct light that is the light emitted from light source units; contains diffused light that is the light emitted from the light source units and thrown out through diffusing units installed in combination with the light source units; and reflected light that is the light emitted from the light source units and reflected from a reflective material (not illustrated) provided in the light source units. However, that is not the only possible case. That is, as long as the light thrown out from a luminous part can contain at least one of the direct light, the diffused light, and the reflected light; it serves the purpose.

Luminaire evaluation method according to embodiments

Given below is the explanation of a luminance uniformity ratio applied in the embodiments. FIG. 2 is a diagram illustrating an installation example of a luminaire. Herein, a luminaire 100 is installed to a ceiling 103 of, for example, an office room; and includes a lighting unit 101 that emits light in the direction of the floor. Moreover, a person 102 is illustrated who can move around to any position inside the room.

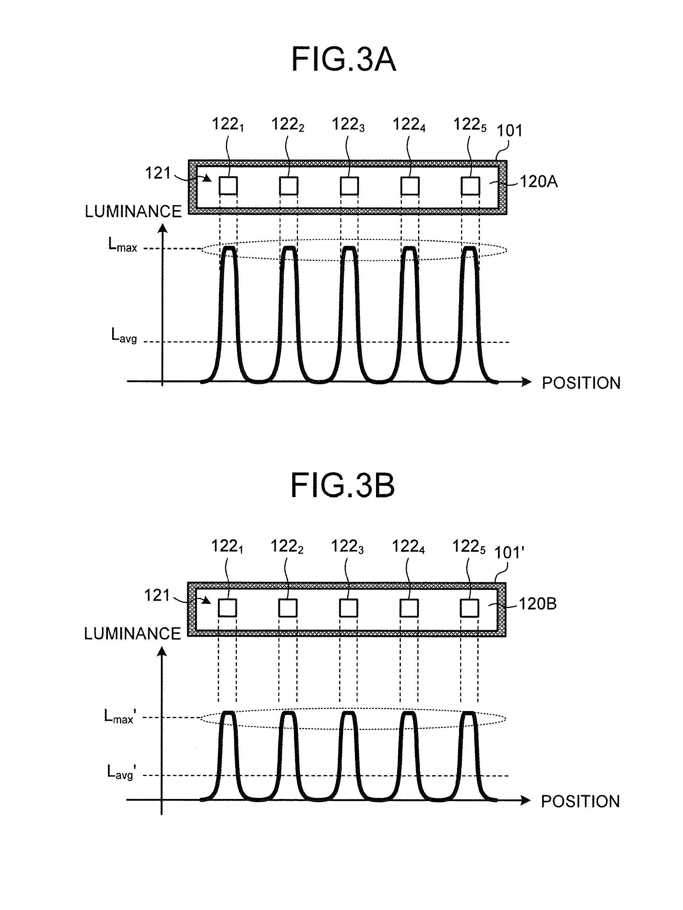

FIGS. 3A and 3B are diagrams illustrating the luminance distribution in the luminous part of the luminaire 100. In FIGS. 3A and 3B, the upper portion illustrates an exemplary configuration of the lighting unit 101 and a lighting unit 101', respectively, of the luminaire 100 when viewed from the front side. In this example, each of the lighting units 101 and 101' includes a light source unit 121 that further includes light sources $122_1$, $122_2$, $122_3$, $122_4$, and $122_5$ each of which is configured by closely arranging one or more LEDs.

In the example illustrated in FIG. 3A, the light emitted from the light sources $122_1$ to $122_5$ is thrown to the outside of the luminaire through a diffuser 120A.

Herein, it is assumed that each of the light sources $122_1$ to $122_5$ is an LED module in which LEDs are used as the light sources. An LED module includes one or more LEDs as light sources; and has the output thereof, that is, the luminance thereof controlled by the current value of the DC power. Since such an LED module has an arrangement of a plurality of LEDs each of which is a point light source, there are times when high-luminance portions are present locally. Because of that, the luminance distribution of the light-emitting faces becomes uneven.

Meanwhile, in the lower portion in FIG. 3A is illustrated an example of the luminance distribution in the luminous part of the lighting unit 101. In the lower portion in FIG. 3B is illustrated an example of the luminance distribution in the luminous part of the lighting unit 101' that includes a diffuser 120B having a higher degree of diffusion as compared to the degree of diffusion of the diffuser 120A included in the lighting unit 101. In the luminance distribution illustrated in the lower portions in FIGS. 3A and 3B, the vertical axis represents the luminance distribution and the horizontal axis represents the positions corresponding to the upper portion in FIGS. 3A and 3B.

For example, in the lighting unit 101, each of the light sources $122_1$ to $122_5$ is configured using LEDs. Hence, as illustrated in the lower portion in FIG. 3A, the luminance is high locally at the position of each of the light sources $122_1$ to $122_5$, and the luminance is at low values in between the light sources $122_1$ to $122_5$. In this case, the maximum luminance is set to be $L_{max}$ and the average luminance is set to be $L_{avg}$. Since the maximum luminance $L_{max}$ appears locally, it is felt to be even more glare as compared to the expected glare for the average luminance $L_{avg}$.

On the other hand, as illustrated in the lower portion in FIG. 3B, in the lighting unit 101', because of the use of the diffuser 120B that has a higher degree of diffusion as compared to the diffuser 120A, the average luminance of the lighting unit 101' decreases to $L_{avg}'$ that is lower than the average luminance $L_{avg}$ of the lighting unit 101 in which the diffuser 120A is used. In this case, the maximum luminance also decreases to $L_{max}'$ that is lower than the maximum luminance $L_{max}$. However, there is no change in the phenomenon in which the maximum luminance $L_{max}'$ appears locally. Hence, it is likely that the glare is felt.

For that reason, in the embodiments, a luminance uniformity ratio is defined that indicates the uniformity of the luminance distribution in a light-emitting face (the luminous part). Herein, a luminance infirmity ratio U of a light-emitting face is calculated according to, for example, Equation (1) given below using the average luminance $L_{avg}$ of the light-emitting face and the maximum luminance $L_{max}$ of the light-emitting face. In other words, it can be said that the luminance uniformity ratio U is a value that quantitatively represents the luminance distribution in the light-emitting face. Moreover, as can be seen in Equation (1), the luminance uniformity ratio U is a value satisfying the range of $0 \leq U \leq 1$.

$$U = L_{avg} / L_{max} \qquad\qquad (1)$$

According to Equation (1), when the average luminance $L_{avg}$ of the light-emitting face is equal to the maximum luminance $L_{max}$ of the light-emitting face, the luminance uniformity ratio U becomes equal to the maximum value 1. However, greater the maximum luminance $L_{max}$ of the light-emitting face as compared to the average luminance $L_{avg}$ of the light-emitting face, smaller becomes the luminance uniformity ratio U. In the examples illustrated in FIGS. 3A and 3B, the lighting unit 101' illustrated in FIG. 3B has the luminance uniformity ratio closer to 1 as compared to the lighting unit 101 illustrated in FIG. 3A.

Meanwhile, Equation (1) is only exemplary, and the luminance uniformity ratio can be obtained by implementing any other method. For example, a combination of any two from among the average luminance of a light-emitting face, the maximum luminance of the light-emitting face, the minimum luminance of the light-emitting face, and the standard deviation of luminance can be used to calculate a ratio and consider that ratio as the luminance uniformity ratio U. That is, the luminance uniformity ratio U can be considered as a ratio calculated using any one of the following combination: the combination of the average luminance and the maximum luminance; the combination of the average luminance and the minimum luminance; the combination of the average luminance and the standard deviation of luminance; the combination of the maximum luminance and the minimum luminance; the combination of the maximum luminance and the standard deviation of luminance; and the combination of the minimum luminance and the standard deviation of luminance.

In the following explanation, it is assumed that the luminance uniformity ratio U is calculated using Equation (1) given above.

Luminaire according to first embodiment

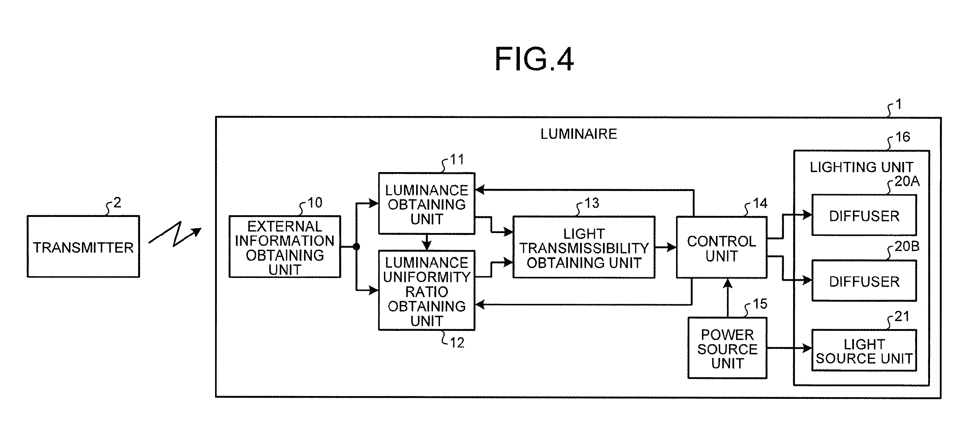

Given below is the explanation of a luminaire according to a first embodiment. FIG. 4 is a diagram illustrating an exemplary configuration of a luminaire according to the first embodiment. In FIG. 4, a luminaire 1 includes an external information obtaining unit 10, a luminance obtaining unit 11, a luminance uniformity ratio obtaining unit 12, a light transmissibility obtaining unit 13, a control unit 14, a power source unit 15, and a lighting unit 16. Herein, the external information obtaining unit 10, the luminance obtaining unit 11, the luminance uniformity ratio obtaining unit 12, the light transmissibility obtaining unit 13, and the control unit 14 can be implemented using computer programs that are run in a central processing unit (CPU) or can be configured partially or entirely as independent hardware components.

The lighting unit 16 includes diffusers 20A and 20B, as well as includes a light source unit 21. Herein, in an identical manner to the light source unit 121 described above, the light source unit 21 includes an LED module in which LEDs are used as the light sources.

In an identical manner to the diffusers 120A and 120B described above, the diffusers 20A and 20B can be configured using a lighting control glass in which, for example, electrochromic glazing elements are used. In this case, the light transmissibility of each of the diffusers 20A and 20B can be varied by changing the current value of the external power supply. However, that is not the only possible case. Alternatively, the diffusers 20A and 20B can be configured using polymer-dispersed liquid crystals (PDLCs) in which the light transmissibility can be varied by inducing a state of irregular arrangement of liquid crystal molecules due to the action of the polymer network and by scattering the light. In this case, the light transmissibility of each of the diffusers 20A and 20B can be varied by changing the voltage value of the external power supply.

Generally, in a diffuser, varying the light transmissibility leads to a change in the degree of diffusion of the light that is diffused. More particularly, as the light transmissibility of a diffuser is reduced, the degree of diffusion increases. The degree of diffusion is expressed as the haze or the degree of dispersion. The haze gives an indication of film transparency and represents turbidity. The haze can be obtained from the ratio of the diffused transmission light to the total transmission light. The degree of dispersion indicates an angle at which, when the center of the direction of emission of light is considered to be 0°, the luminance becomes 50% with respect to the luminance at 0°. Thus, greater the degree of dispersion, more superior is the diffuseness.

The power source unit 15 supplies power to the light source unit 21 and makes the light source unit 21 emit light. Moreover, the power source unit 15 supplies power to the diffusers 20A and 20B, and varies the light transmissibility of each of the diffusers 20A and 20B under the control of the control unit 14.

A transmitter 2 sends information that indicates at least the position of a person to the external information obtaining unit 10.

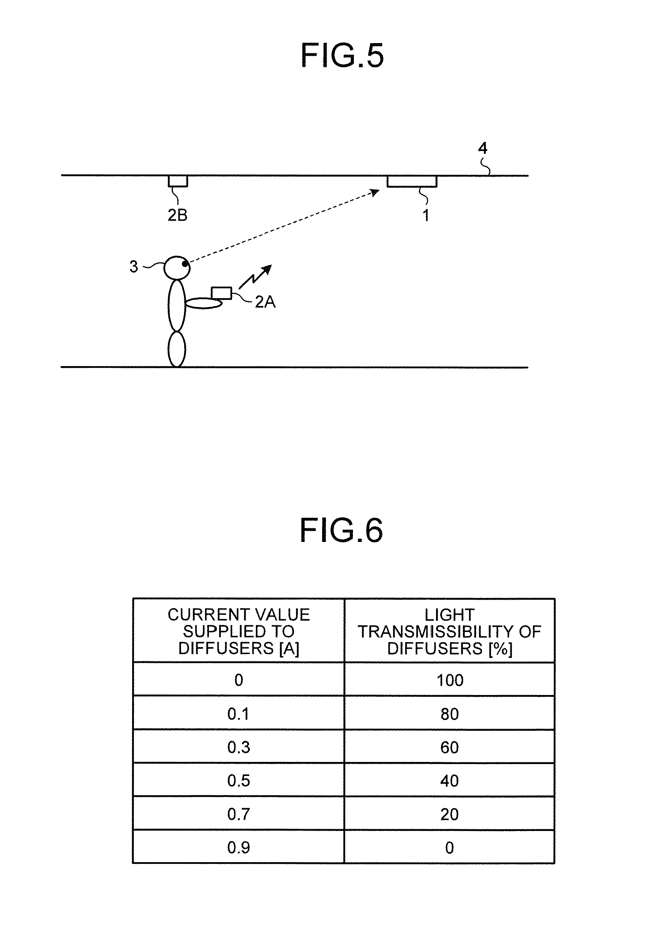

FIG. 5 is a diagram that schematically illustrates an installation example of the luminaire 1 according to the first embodiment. The luminaire 1 is installed to a ceiling 4 of, for example, an office room; and emits light in the direction of the floor.

The transmitter 2 can be, for example, a communication 2A that is operated by a person 3 and that sends, by means of wireless communication, the information indicating the position of the person 3. As the communication device 2A, it is possible to use, for example, a smartphone or a tablet computer having the communication function. In this case, the external information obtaining unit 10 is configured to be capable of performing wireless communication with the communication device 2A. As an example, it is possible to think of a case in which map data of the room is stored in advance in the communication device 2A, and the person 3 specifies his or her position in the map data. Then, the communication device 2A sends position information, which indicates the position of the person 3, to the external information obtaining unit 10.

However, the transmitter 2 is not limited to this configuration. Alternatively, the transmitter 2 can be a motion sensor 2B that detects the whereabouts of the person 3 using infrared lights. Upon detecting the whereabouts of the person 3, the motion sensor 2B sends, in either a wireless manner or a wired manner, a signal indicating the detection to the external information obtaining unit 10. In this case, the motion sensor 2B can be installed at a plurality of locations in the room. Then, the external information obtaining unit 10 can identify the motion sensor 2B that outputs the signal indicating the whereabouts of the person 3, and then can obtain the position information indicating the position of the person 3.

Meanwhile, the method of detecting the whereabouts of the person 3 is not limited to the method of using the motion sensor 2B. Alternatively, for example, the position of the person 3 can be detected from the images captured by a camera. For example, a camera can be installed to capture images of the room. Herein, it is possible install a plurality of cameras in the room, or it is possible to install a single camera having movable photographing direction. Subsequently, a technique such as pattern matching is implemented to detect a person from the captured images, and to obtain the position of the person from the in-image size of that person or from the relationship of the person with the position of known furniture that is captured in the images.

The position information indicating the position of the person contains information indicating the height. Herein, the information indicating height can indicate the position of eyes of a person who has the average height and who is standing, or can indicate the predicted position of eyes when the person is sitting.

With reference to FIG. 4, the external information obtaining unit 10 receives the position information from the transmitter 2, and provides that position information to the luminance obtaining unit 11 and the luminance uniformity ratio obtaining unit 12.

The luminance obtaining unit 11 obtains the luminance in the luminous part of the luminaire 1 at the position of the person 3 based on the position information received from the external information obtaining unit 10, light distribution information of the luminaire 1 that is stored in advance in a read only memory (ROM) (not illustrated), and the existing light transmissibility of each of the diffusers 20A and 20B that is controlled by the control unit 14 (described later). Herein, the luminance that is obtained is the average luminance in the luminous part of the luminaire 1 without taking into account the luminance distribution in the luminous part.

Herein, luminous intensity distribution is specific to the luminaire 1. Moreover, for each light transmissibility (for example, for every 10% of the light transmissibility) of the diffusers 20A and 20B, luminous intensity distribution is either measured in advance or calculated in advance and is stored in the form a light distribution information table in a ROM. More particularly, in the total luminous flux of the light source unit 21, luminous intensity distribution for each light transmissibility is obtained for gradual values of the total luminous flux of the light source unit 21, and is stored in a light distribution information table. Moreover, in the light distribution table, luminous intensity distribution for each light transmissibility that is obtained for gradual values of the total luminous flux of the light source unit 21 is obtained for gradual values of the output of the power source unit 15, and is stored. That is, the light distribution table contains luminous intensity distribution corresponding to the total luminous flux of the light source unit 21 as well as contains luminous intensity distribution corresponding to the output of the power source unit 15.

However, that is not the only possible case. Alternatively, for example, the person 3 can input luminous intensity distribution to the transmitter 2, and then the transmitter 2 can send that light distribution information to the external information obtaining unit 10. Subsequently, the external information obtaining unit 10 provides luminous intensity distribution to the luminance obtaining unit 11.

The luminance uniformity ratio obtaining unit 12 refers to the position information received from the external information obtaining unit 10, the average luminance obtained by the luminance obtaining unit 11, the existing light transmissibility of each of the diffusers 20A and 20B that is controlled by the control unit 14 (described later), and the existing maximum luminance of the light source unit 21; and accordingly obtains the luminance uniformity ratio in the luminous part of the luminaire 1 at the position of the person 3.

For example, the luminance uniformity ratio obtaining unit 12 can refer to a table that contains the position information, the average luminance, the light transmissibility, and the maximum luminance in a corresponding manner and that is stored in advance in a ROM (not illustrated); and can obtain the luminance uniformity ratio. However, that is not the only possible case. Alternatively, for example, the person 3 can input the luminance uniformity ratio to the transmitter 2, and then the transmitter 2 can send that luminance uniformity ratio to the external information obtaining unit 10. Subsequently, the external information obtaining unit 10 provides the luminance uniformity ratio to the luminance uniformity ratio obtaining unit 12.

As described later, the control unit 14 controls the current supplied by the power source unit 15 to the light source unit 21, and accordingly controls the light output of the light source unit 21.

The light transmissibility obtaining unit 13 refers to the average luminance obtained by the luminance obtaining unit 11 and the luminance uniformity ratio obtained by the luminance uniformity ratio obtaining unit 12; and accordingly obtains the light transmissibility of each of the diffusers 20A and 20B. At that time, the light transmissibility obtaining unit 13 obtains the light transmissibility of each of the diffusers 20A and 20B in such a way that the luminance and the luminance uniformity ratio of the light emitted from the luminaire 1 at the position of the person 3 is within a predetermined range. In that regard, a light transmissibility obtaining operation performed by the light transmissibility obtaining unit 13 is described later in detail.

Based on the light transmissibility obtained by the light transmissibility obtaining unit 13, the control unit 14 controls the supply of power from the power source unit 15 to the diffusers 20A and 20B as well as to the light source unit 21. More particularly, the control unit 14 controls the supply of power from the power source unit 15 to the diffusers 20A and 20B in such a way that the light transmissibility of each of the diffusers 20A and 20B becomes equal to the light transmissibility received from the light transmissibility obtaining unit 13.

For example, as illustrated in FIG. 6, a diffuser control table, in which the current values of the power supplied to the diffusers 20A and 20B are stored in a corresponding manner to the light transmissibility of the diffusers 20A and 20B, is stored in advance in a ROM (not illustrated). The control unit 14 refers to that table according to the light transmissibility received from the light transmissibility obtaining unit 13, and determines the current value of the power to be supplied to the diffusers 20A and 20B. Meanwhile, the control unit 14 is configured to be capable of independently controlling the light transmissibility of the diffuser 20A and the light transmissibility of the diffuser 20B.

Moreover, the control unit 14 controls the current value of the power supplied from the power source unit 15 to the light source unit 21 in such a way that the average luminance of the light source unit 21 is constant before and after a change in the light transmissibility of the diffusers 20A and 20B. For example, for each average luminance of the light source unit 21, a table in which the light transmissibility of the diffusers 20A and 20B and the current values supplied to the light source unit 21 are held in a corresponding manner is created when that average luminance of the light source unit 21 is maintained constant. All such tables are stored in advance in a ROM (not illustrated). The control unit 14 refers to a table according to the light transmissibility of the diffusers 20A and 20B, and determines the current value of the power to be supplied to the light source unit 21.

If the light transmissibility of each of the diffusers 20A and 20B is reduced, the luminance uniformity ratio increases and the discomfort glare decreases. On the other hand, if the light transmissibility of each of the diffusers 20A and 20B is reduced, the average luminance also decreases thereby resulting in a decrease in the space brightness. In that regard, by varying the luminance uniformity ratio while keeping the average luminance constant, it becomes possible to provide an environment in which the discomfort layer is restricted while maintaining appropriate space brightness.

Lighting control operation according to first embodiment

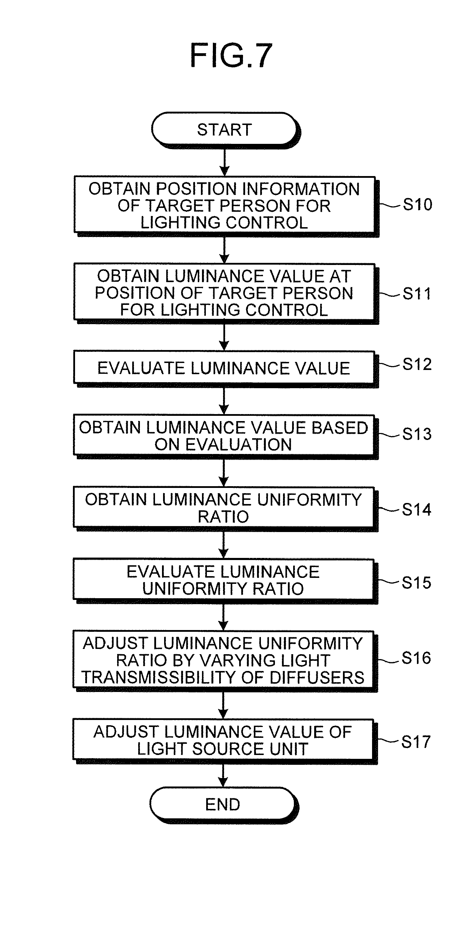

Given below is the explanation of the lighting control performed in the luminaire 1 according to the first embodiment. FIG. 7 is a flowchart for explaining an exemplary lighting control operation according to the first embodiment. Herein, it is assumed that the operations illustrated in the flowchart are started from an initial state in which the diffusers 20A and 20B have 100% light transmissibility in the luminaire 1.

Firstly, in the luminaire 1, the external information obtaining unit 10 receives the position information from the transmitter 2 as well as obtains the position information of the person 3 who is the target person for lighting control (Step S10). Then, the luminance obtaining unit 11 refers to the position information received from the external information obtaining unit 10, luminous intensity distribution of the luminaire 1 that is stored in advance in a ROM, and the light transmissibility of each of the diffusers 20A and 20B that is obtained from the control unit 14; and accordingly obtains the luminance in the luminous parts of the luminaire 1 at the position of the target person for lighting control (Step S11).

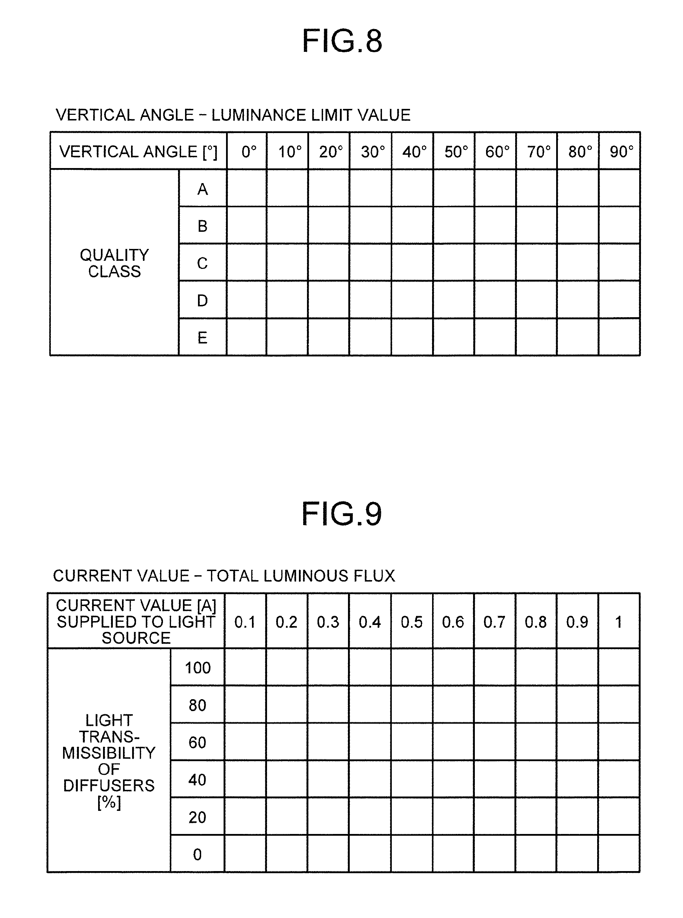

Subsequently, the light transmissibility obtaining unit 13 evaluates the luminance value obtained at Step S11 (Step S12). Herein, according to a predetermined luminance limit value for each vertical angle, the light transmissibility obtaining unit 13 determines whether or not the luminance value obtained at Step S11 causes the feeling of a glare to the target person for lighting control. For example, as illustrated in FIG. 8, the light transmissibility obtaining unit 13 creates a luminance limit value table in which the luminance limit value for vertical angles are classified in relation to quality classes, and stores in advance the luminance limit value table in a ROM (not illustrated).

Herein, a vertical angle is the angle made between the normal line and the luminous part of the luminaire 1.

Herein, the quality classes point to five classes, which are defined in the CIE glare safeguard system (CIE points to International Commission on Illumination) specified in non-patent literature "CIE Pub Bo 29.2: Guide on interior lighting (1986)" and in which the extent of discomfort glare due to a luminaire is expressed as classification values belonging to a class A to a class E in the descending order of the work quality demanded under the lighting. At the same vertical angle, regarding the luminance indicated by the luminance limit value, the classification values of the quality classes tend to decrease the most in the class A and tend to increase the most in the class E. Moreover, if the classification value of the quality classes is the same, the luminance indicated by the luminance limit value tends to decrease more with an increase in the vertical angle. The qualitative classes are, for example, set in advance depending on the environment in which the luminaire 1 is installed or depending on the usage of the luminaire 1.

Thus, from the position information of the target person for lighting control, the light transmissibility obtaining unit 13 calculates the vertical angle of the position of the target person for lighting control with respect to the luminaire 1. Then, the light transmissibility obtaining unit 13 compares the luminance limit value, which is referred to using the classification value of the glare qualitative class set in the luminaire 1 and the vertical angle, with the luminance value obtained at Step S11. Then, the light transmissibility obtaining unit 13 evaluates the luminance value by determining whether or not the luminance value obtained at Step S11 is exceeding the luminance limit value.

Subsequently, the light transmissibility obtaining unit 13 obtains a new luminance value based on the luminance value evaluation performed at Step S12 (Step S13). For example, if it is determined at Step S12 that the luminance value is exceeding the luminance limit value, then the light transmissibility obtaining unit 13 obtains such an output of the light source unit 21 which ensures that the luminance value of the lighting of the luminaire 1 at the position of the target person for lighting control is equal to or smaller than the luminance limit value. In order to obtain such an output, the light transmissibility obtaining unit 13 obtains the current value of the current supplied to the light source unit 21 and provides it to the control unit 14.

More particularly, from luminous intensity distribution of each total luminous flux specified in luminous intensity distribution table, the light transmissibility obtaining unit 13 selects luminous intensity distribution regarding which the luminance value at the position of the target person for lighting control is equal to or smaller than the luminance limit value used at Step S12. Then, in order to obtain the total luminous flux corresponding to the selected light distribution information, the light transmissibility obtaining unit 13 obtains the current value of the current supplied to the light source unit 21, and sends the current value to the control unit 14.

Herein, in order to obtain the current value, the light transmissibility obtaining unit 13 refers to a light source control table which is created in advance and in which the current values of the power supplied to the light source unit 21 are stored in a corresponding manner to the total luminous fluxes of the light emitted from the light source unit 21. In the example illustrated in FIG. 9, in the light source control table, the current values and the total luminous fluxes are held in a corresponding manner for each light transmissibility of the diffusers 20A and 20B. The light source control table is created in advance and is stored in a ROM.

Then, the luminance uniformity ratio obtaining unit 12 obtains the luminance uniformity ratio in the luminous part of the luminaire 1 (Step S14). As described above, the luminance uniformity ratio obtaining unit 12 obtains the luminance uniformity ratio based on the position information received from the external information obtaining unit 10, the average luminance obtained by the luminance obtaining unit 11, the existing light transmissibility of each of the diffusers 20A and 20B that is controlled by the control unit 14 (described later), and the existing maximum luminance of the light source unit 21. Herein, the maximum luminance of the light source unit 21 points to the maximum luminance when the light source unit 21 is driven by the current value obtained at Step S13.

For example, the luminance uniformity ratio obtaining unit 12 obtains the luminance uniformity ratio of the light source unit 21 based on the current value that is controlled by the control unit 14 with respect to the light source unit 21. The luminance uniformity ratio points to a value when the vertical angle is 0° with respect to the luminaire 1. The luminance uniformity ratio obtaining unit 12 refers to a luminance uniformity ratio table, which indicates the correspondence relationship with the vertical angles of the luminance uniformity ratio, according to the vertical angle calculated from the position information of the person 3; and obtains the luminance uniformity ratio at the position of the target person for lighting control.

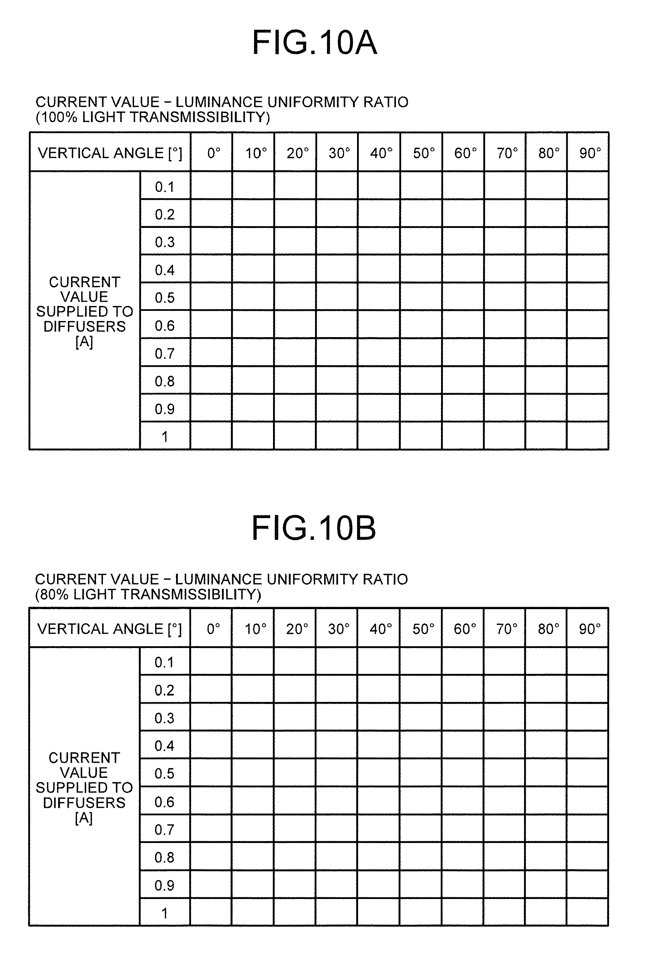

FIGS. 10A and 10B illustrate examples of the luminance uniformity ratio table according to the first embodiment. As illustrated in FIGS. 10A and 10B, for each light transmissibility of the diffusers 20A and 20B, the luminance uniformity ratio at each vertical angle is associated to each current value of the power supplied to the light source unit 21. If the current value of the current supplied to the light source unit 21 is the same, the luminance uniformity ratio tends to increase with an increase in the vertical angle. Moreover, the luminance uniformity ratio tends to increase also with a decrease in the current value of the current supplied to the light source unit 21. Furthermore, if the vertical angle and the current value to the light source unit 21 are the same, the luminance uniformity ratio tends to increase with a decrease in the light transmissibility. Meanwhile, the luminance uniformity ratio table is created in advance and is stored in a ROM (not illustrated).

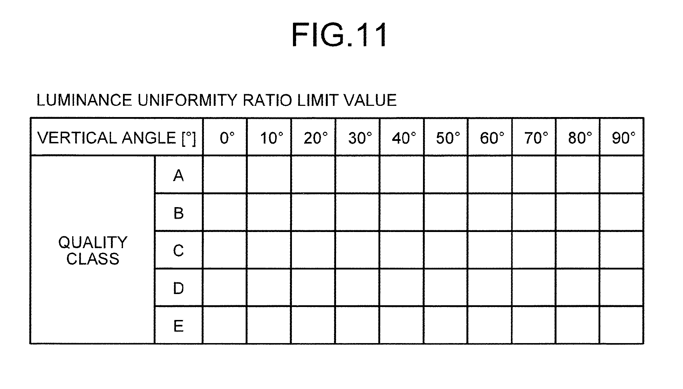

Subsequently, the light transmissibility obtaining unit 13 evaluates the luminance uniformity ratio that has been obtained at Step S14 (Step S15). Herein, according to a predetermined luminance uniformity ratio limit value for each vertical angle, the light transmissibility obtaining unit 13 determines whether or not the luminance uniformity ratio obtained at Step S14 causes the feeling of a glare to the target person for lighting control. For example, as illustrated in FIG. 11, the light transmissibility obtaining unit 13 creates a luminance uniformity ratio limit value table in which the luminance uniformity ratio limit values for vertical angles are classified in relation to the quality classes, and stores in advance the luminance uniformity ratio limit value table in a ROM (not illustrated).

Regarding the luminance uniformity ratio limit value, the classification values of the quality classes tend to decrease the most in the class A and tend to increase the most in the class E. Moreover, if the classification value of the quality classes is the same, the luminance uniformity ratio tends to decrease more with an increase in the vertical angle. If the luminance uniformity ratio obtained at Step S14 is smaller than the luminance uniformity ratio, to which corresponds the vertical angle for the classification value of the glare qualitative class set with respect to the luminaire 1; then the light transmissibility obtaining unit 13 determines that the target person for lighting control feels the glare.

Meanwhile, the values stored in the tables illustrated in FIGS. 6, 8, 9, 10, and 11 are discreet values. Hence, in the case of referring to an inter-element value, interpolation is performed using the values of adjacent elements.

Then, the light transmissibility obtaining unit 13 adjusts the luminance uniformity ratio (Step S16). That is, in the case when the luminance uniformity ratio obtained at Step S14 is determined at Step S15 to cause the feeling of a glare to the target person for lighting control, the light transmissibility obtaining unit 13 adjusts the luminance uniformity ratio to a greater value so as to ensure that the target person for lighting control does not feel the glare.

Herein, the light transmissibility obtaining unit 13 adjusts the luminance uniformity ratio by changing the light transmissibility of the diffusers 20A and 20B. That is, the light transmissibility obtaining unit 13 obtains such a light transmissibility of the diffusers 20A and 20B at which the luminance uniformity ratio of the luminous part of the luminaire 1 is equal to or greater than the luminance uniformity ratio obtained at Step S15 from the luminance uniformity ratio limit value table illustrated in FIG. 11. More particularly, the light transmissibility obtaining unit 13 refers to the luminance uniformity ratio table illustrated in FIGS. 10A and 10B and obtains the light transmissibility of each of the diffusers 20A and 20B corresponding to the position information obtained at Step S10, corresponding to the current value of the current supplied to the light source unit 21 having the luminance obtained at Step S13, and corresponding to the luminance uniformity ratio limit value obtained at Step S14. Then, the light transmissibility obtaining unit 13 refers to the diffuser control table illustrated in FIG. 6 for the obtained light transmissibility; obtains the current value of the current supplied to the diffusers 20A and 20B; and provides that current value to the control unit 14.

Subsequently, the light transmissibility obtaining unit 13 adjusts the luminance value of the light emitted from the light source unit 21 (Step S17). That is, at Step S16, the light transmissibility of each of the diffusers 20A and 20B is adjusted to a smaller value so that the luminance uniformity ratio increases to a greater value. For that reason, regarding the luminance value of the light emitted from the luminaire 1, the luminance value at the position of the target person for lighting control decreases to a value smaller than the appropriate value. Hence, at Step S17, the light transmissibility obtaining unit 13 increases the output of the light source unit 21 and adjusts the luminance value at the position of the target person for lighting control to the appropriate value.

More particularly, from luminous intensity distribution of each total luminous flux specified in luminous intensity distribution table, the light transmissibility obtaining unit 13 selects luminous intensity distribution regarding which the luminance value at the position of the target person for lighting control is equal to the luminance value obtained at Step S13. Then, in order to obtain the total luminous flux corresponding to the selected light distribution information, the light transmissibility obtaining unit 13 refers to the light source control table illustrated in FIG. 9; obtains the current value corresponding to the light source unit 21; and provides the current value to the control unit 14.

In this way, in the first embodiment, the luminance in the luminous part of the luminaire 1 as well as the light transmissibility (i.e., the degree of diffusion) of the diffusers 20A and 20B, which are installed with respect to the light source unit 21 in the luminaire 1, is varied according to the position of the target person for lighting control while taking into account the luminance uniformity ratio. For that reason, the target person for lighting control is spared from feeling the glare.

Meanwhile, although the explanation is given for a case in which the communication device 2A sends the position information that indicates the position of the person 3, it is not the only possible case. In addition, for example, the communication device 2A can also send personal information of the person 3 to the luminaire 1. For example, the communication device 2A can be configured to include an input unit from which the person 3 can input a tolerance against the glare. Thus, along with the position information, the communication device 2A sends the tolerance against the glare as per the input of the person 3. Based on the information indicating the tolerance against the glare, the luminaire 1 adjusts, for example, the luminance limit value and the luminance uniformity ratio limit value; and determines the light transmissibility of each of the diffusers 20A and 20B as well as determines the output of the light source unit 21 using the adjusted luminance limit value and the adjusted luminance uniformity ratio limit value.

Herein, it is possible to think of a case in which the tolerance against the glare is directly input using numerical values. However, that is not the only possible case. Alternatively, it is also possible to input and send personal information of the person 3, such as the age of the person 3 or the iris of the person 3, that is relevant at the time of feeling the glare.

Modification example of first embodiment

Given below is the example of a modification example of the first embodiment. In the first embodiment, firstly the luminance of the luminous parts is varied; then the luminance uniformity ratio is varied based on the luminance that has been varied; and then the luminance is varied again so as to compensate for the decline in the luminance due to the change in the luminance uniformity ratio. In contrast, in the modification example of the first embodiment, firstly the luminance uniformity ratio of the luminous parts is varied and then the luminance of the luminous parts is varied. In this case too, in an identical manner to the first embodiment, the target person for lighting control can be spared from feeling the glare.

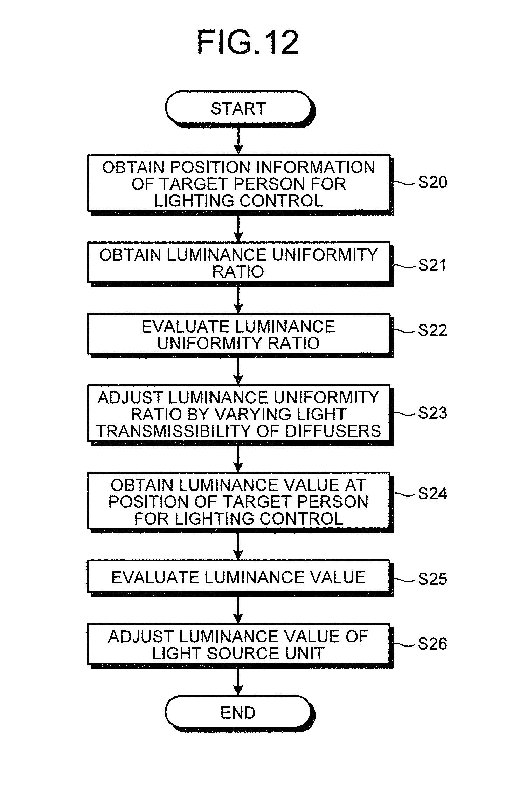

FIG. 12 is a flowchart for explaining an example of the lighting control operation according to the modification example of the first embodiment. In the modification example of the first embodiment, the configuration of the luminaire 1 according to the first embodiment can be implemented without modification. Moreover, the tables explained with reference to FIGS. 6, 8, 9, 10, and 11 can also be used without modification in the modification example of the first embodiment.

Herein, in an identical manner to the description given above, it is assumed that the operations illustrated in the flowchart in FIG. 12 are started from an initial state in which the diffusers 20A and 20B have 100% light transmissibility in the luminaire 1. In the luminaire 1, the external information obtaining unit 10 receives the position information from the transmitter 2, and obtains the position information of the target person for lighting control (Step S20).

Then, in an identical manner to Step S14 described above, the luminance uniformity ratio obtaining unit 12 obtains the luminance uniformity ratio at the position of the target person for lighting control (Step S21). Subsequently, in an identical manner to Step S14 described above, the light transmissibility obtaining unit 13 evaluates the luminance uniformity ratio obtained at Step S21 (Step S22). Then, in an identical manner to Step S16 described above, the light transmissibility obtaining unit 13 adjusts the luminance uniformity ratio by varying the light transmissibility of the diffusers 20A and 20B (Step S23).

Subsequently, in an identical manner to Step S11 described above, the luminance obtaining unit 11 obtains the luminance in the luminous parts of the luminaire 1 at the position of the target person for lighting control (Step S24). Herein, the luminance value is obtained after the adjustment of the luminance uniformity ratio at Step S23. Then, in an identical manner to Step S12 described above, the light transmissibility obtaining unit 13 evaluates the luminance value obtained at Step S24 (Step S25).

Subsequently, in an identical manner to Step S13 described above, the light transmissibility obtaining unit 13 obtains a new luminance value based on the evaluation of the luminance value performed at Step S25 (Step S26). That is, if it is determined at Step S25 that the luminance value is exceeding the luminance limit value, then the light transmissibility obtaining unit 13 obtains such an output of the light source unit 21 at which the lighting of the luminaire 1 at the position of the target person for lighting control has the luminance value equal to or smaller than the luminance limit value. In order to obtain such an output, the light transmissibility obtaining unit 13 obtains the current value of the current supplied to the light source unit 21 and provides it to the control unit 14. As a result, the luminance value of the light emitted from the light source unit 21 at the position of the target person for lighting control is adjusted to the appropriate level. Hence, the target person for lighting control is spared from feeling the glare.

Thus, according to the modification example of the first embodiment, the appropriate luminance with respect to the target person for lighting control can be obtained by implementing the lighting control operation in which the number of operations is smaller by one than the number of operations in the lighting control operation according to the first embodiment.

Application example of first embodiment and modification example of first embodiment

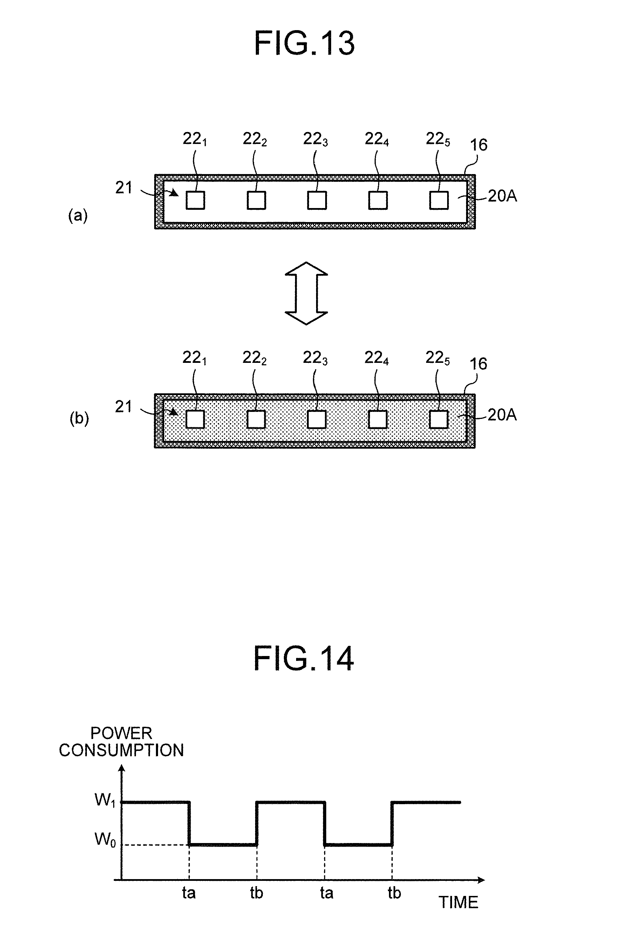

Explained below with reference to FIGS. 13 to 16 is an application example of the first embodiment and the modification example of the first embodiment. As described above, in the first embodiment and the modification example of the first embodiment, the luminance uniformity ratio of the luminaire 1 can be varied depending on the presence or absence of the target person for lighting control (i.e., the person 3) or depending on the position of the target person for lighting control.

As an example, as illustrated in FIGS. 13(a) and 13(b), consider the lighting unit 16 in which the diffuser 20A is attached to the light source unit 21. Moreover, it is assumed that the light source unit 21 includes a plurality of light sources $22_1$, $22_2$, $22_3$, $22_4$, and $22_5$ each of which is configured with an LED module. In FIG. 13(a) is illustrated an example in which the diffuser 20A has 100% light transmissibility. In contrast, in FIG. 13(b) is illustrated an example in which the light transmissibility of the diffuser 20A is controlled to an arbitrary percentage (such as 50%) that is smaller than 100%.

In the case when the external information obtaining unit 10 has not obtained the position information sent by the transmitter 2, that is, in the case when the target person for lighting control is not present in the space in which the luminaire 1 is installed; the luminaire 1 remains in the initial state described in the flowcharts in FIGS. 7 and 12, and the diffuser 20A has 100% light transmissibility. That state corresponds to the state illustrated in FIG. 13(a). In that case, the luminaire 1 has a low luminance uniformity ratio but a high degree of luminance. Meanwhile, the space in which the luminaire 1 is installed is hereinafter called a luminous environment.

On the other hand, in the case when the external information obtaining unit 10 has obtained the position information sent by the transmitter 2, that is, in the case when the target person for lighting control is present in the luminous environment of the luminaire 1; the light transmissibility of the diffuser 20A is varied depending on the position of the target person for lighting control as described in the flowchart illustrated in FIG. 7 or FIG. 12. That state corresponds to the state illustrated in FIG. 13(b). In that case, the luminance uniformity ratio of the luminaire 1 increases and the glare is reduced.

In the state illustrated in FIG. 13(a) in which the diffuser 20A has 100% light transmissibility, the current supplied to the diffuser 20A has the smallest current value. Hence, it can be expected to achieve the effect of electrical power saving. FIG. 14 is a diagram illustrating an example of changes occurring in power consumption W due to the control of the light transmissibility of the diffuser 20A when the target person for luminaire enters and leaves the luminous environment of the luminaire 1. In FIG. 14, each point of time $t_a$ indicates the timing at which the target person for lighting control leaves the luminous environment, while each point of time $t_b$ indicates the timing at which the target person for lighting control enters the luminous environment. Herein, power consumption $W_0$ in the case of the absence of the target person for lighting control in the luminous environment is held down to a lower level as compared to power consumption $W_1$ in the case of the presence of the target person for lighting control in the luminous environment.

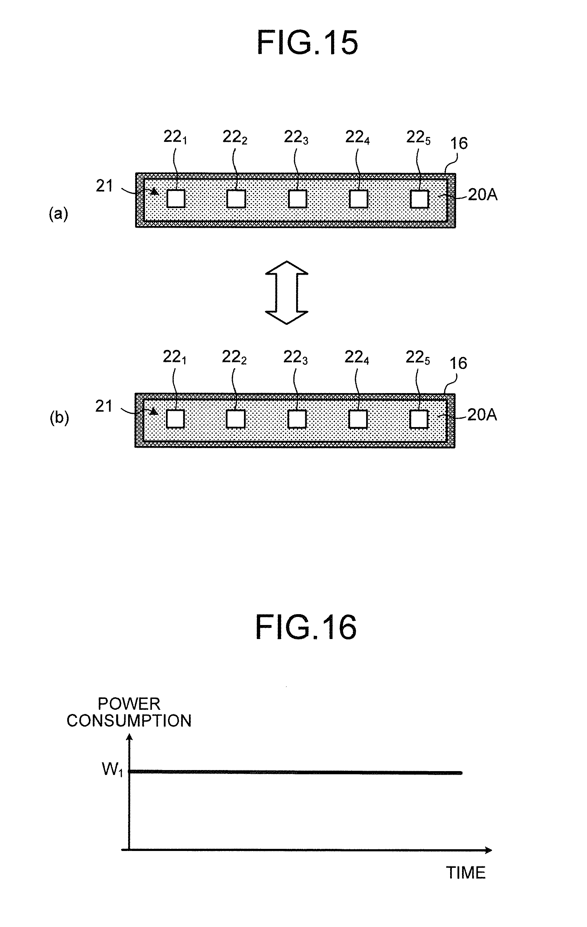

FIG. 15 is a diagram illustrating an example in which the light transmissibility of the diffuser 20A is controlled on a constant basis regardless of the presence or absence of the target person for lighting control in the luminous environment. That is, not only in the case when the target person for lighting control is present in the luminous environment (FIG. 15(a)) but also in the case when the target person for lighting control is not present in the luminous environment (FIG. 15(b)), the light transmissibility of the diffuser 20A is controlled on a constant basis to a percentage smaller than 100%. In this case, as illustrated in FIG. 16, the luminaire 1 constantly controls the light transmissibility of the luminaire 1 and thus has power consumption $W_1$ on a constant basis.

By comparing FIG. 14 with FIG. 16, it can be understood that, in the first embodiment and the modification example of the first embodiment, if the light transmissibility of the diffuser 20A is controlled depending on the presence or absence of the target person for lighting control; the power consumption of the luminaire 1 can be held down as compared to the case when the light transmissibility of the diffuser 20A is set to be constant regardless of the presence or absence of the target person for lighting control. With that, it can be expected to achieve the effect of electrical power saving.

Moreover, in the state in which the diffuser 20A has 100% light transmissibility, if the luminance uniformity ratio decreases, the glare is felt. However, at the same time, since the light emitted from the light source unit 21 is thrown out as it is to the outside; the lighting efficiency increases and the current value of the power supplied to the light source unit 21 can be held down. In that regard too, it can be expected to achieve the effect of electrical power saving.

In this way, in an environment in which there is frequent coming and going of people and which needs to be illuminated all the time, it can be expected that the use of the luminaire 1 results in achieving the effect of electrical power saving. Thus, it is possible to think of installing the luminaire 1 according to the first embodiment or the luminaire according to the modification example of the first embodiment in offices or in street lights or parking lots. In this luminaire 1, when people are present in the lighting installation area, the luminance uniformity ratio is increased and the discomfort glare is reduced. On the other, when there is nobody in the lighting installation area, the luminance uniformity ratio is reduced and the lighting efficiency is enhanced. Hence, as compared to the case in which the discomfort glare is constantly taken into account, it becomes possible to not only enhance the effect of electrical power saving but also achieve a lighting space in which the discomfort glare is reduced.

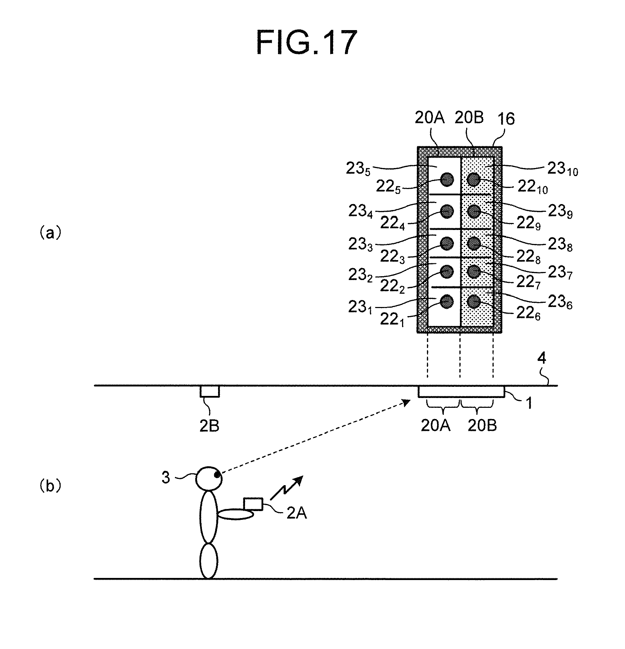

Explained below with reference to FIG. 17 is another application example of the first embodiment and the modification example of the first embodiment. As described above, in the luminaire according to the first embodiment and the modification example of the first embodiment, the light transmissibility of each of the diffusers 20A and 20B can be varied independent of each other.

FIG. 17(a) is a front view of the lighting unit 16 of the luminaire 1. In the example illustrated in section (a) in FIG. 17, the two diffusers 20A and 20B are disposed adjacent to each other in the lighting unit 16. In section (b) in FIG. 17 is schematically illustrated an installation example of the luminaire 1. In this example, when the person 3 looks at the luminaire 1, the diffuser 20B can be seen on the far side of the diffuser 20A. Herein, it is assumed that the luminaire 1 has a frame that protrudes from the luminous part. When the person 3 looks in the direction of the luminaire 1, the portion including the diffuser 20B comes in sight of the person 3. However, the portion including the diffuser 20A, which is on the near side as compared to the diffuser 20B, may get shielded by the frame and may not come in sight of the person 3.

In that regard, in the luminaire 1, the direction from the position of the person 3 with respect to the luminaire 1 is determined according to the position information, which is obtained based on the output of the communication device 2A or the motion sensor 2B and which indicates the position of the person 3; and the light transmissibility to be varied is determined from among the light transmissibility of the diffuser 20A and the light transmissibility of the diffuser 20B. In the example illustrated in section (b) in FIG. 17, the light transmissibility of the diffuser 20B is varied according to the flowchart illustrated in FIG. 7 or FIG. 12, while the light transmissibility of the diffuser 20A is kept as it as at 100%.

In this way, depending on the position of the person 3, the light transmissibility of either one of the diffusers 20A and 20B is varied and the light transmissibility of the other diffuser is kept at 100%. With that, it can be expected to achieve the effect of electrical power saving. Besides, since the light transmissibility of either one of the diffusers 20A and 20B is kept as it is at 100%, it also becomes possible to ensure luminance.

Meanwhile, it is also possible to further divide the diffusers 20A and 20B into smaller areas, and the light transmissibility of each smaller area can be varied in an independent manner. Moreover, in the case when the light source unit 21 includes a plurality of light sources, the output of each such light source can also be varied in an independent manner.

In the example illustrated in section (a) in FIG. 17, the light source unit 21 includes 10 light sources, namely, a light source $22_1$ to a light source $22_{10}$; and the output of each such light source can be independently controlled. From among the light sources $22_1$ to $22_{10}$; the light sources $22_1$ to $22_5$ emit light that is then thrown out through the diffuser 20A, and the light sources $22_6$ to $22_{10}$ emit light that is then thrown out through the diffuser 20B.

Each of the diffusers 20A and 20B is divided into five areas corresponding to the positions of the light sources $22_1$ to $22_{10}$. More particularly, the diffuser 20A is divided into areas $23_1$ to $23_5$ corresponding to the positions of the light sources $22_1$ to $22_5$. In an identical manner, the diffuser 20B is divided into areas $23_6$ to $23_{10}$ corresponding to the positions of the light sources $22_6$ to $22_{10}$. The control unit 14 is configured to be capable of varying the light transmissibility of each of the areas $23_1$ to $23_{10}$ in a mutually independent manner.

In this way, by having a configuration in which the output of each of the light sources $22_1$ to $22_{10}$ in the light source unit 21 can be varied in an independent manner and in which the light transmissibility of each of the areas $23_1$ to $23_{10}$ can be varied in an independent manner; it can be expected to achieve a more potent effect of electrical power saving. Besides, the luminance of the luminaire 1 with respect to the target person for lighting control can be controlled in a more detailed manner, thereby making it possible to achieve lighting of higher quality.

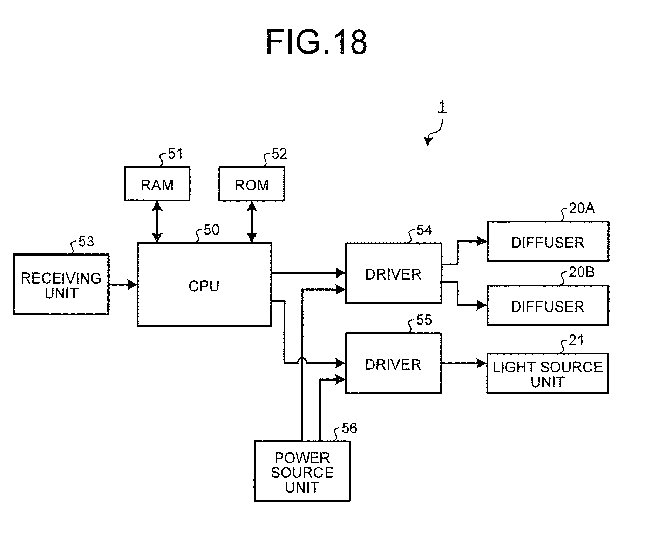

FIG. 18 is a diagram illustrating an exemplary configuration of the luminaire 1 that can be implemented in the first embodiment and the modification example of the first embodiment. In FIG. 18, the constituent elements identical to the constituent elements illustrated in FIG. 4 are referred to by the same reference numerals, and the detailed explanation thereof is not repeated.

In FIG. 18, the luminaire 1 includes a central processing unit (CPU) 50, a random access memory (RAM) 51, a read only memory (ROM) 52, a receiving unit 53, drivers 54 and 55, a power source unit 56, the diffusers 20A and 20B, and the light source unit 21. The ROM 52 is used to store in advance a control program that is used in controlling the luminaire 1. The CPU 50 follows the instructions given in the control program stored in the ROM 52, and controls the overall operations of the luminaire 1 using the RAM 51 as a work memory.

The receiving unit 53 receives signals that are sent by the transmitter 2, and provides the signals to the CPU 50. The driver 54 varies the current value of the power, which is supplied by the power source unit 56, under the control of the CPU 50; and supplies the current value to the diffusers 20A and 20B. In an identical manner, the driver 55 varies the current value of the power, which is supplied by the power source unit 56, under the control of the CPU 50; and supplies the current value to the light source unit 21.

In such a configuration, the external information obtaining unit 10, the luminance obtaining unit 11, the luminance uniformity ratio obtaining unit 12, the light transmissibility obtaining unit 13 and the control unit 14 are implemented using the computer programs running in the CPU 50. Moreover, luminous intensity distribution table as well as the tables explained with reference FIGS. 6, 8, 9, 10, and 11 are stored in advance in the ROM 52.

Meanwhile, a computer program that is executed in order to perform the lighting control operation according to the flowchart illustrated in FIG. 7 or FIG. 12 contains a module for each of the abovementioned constituent elements (the external information obtaining unit 10, the luminance obtaining unit 11, the luminance uniformity ratio obtaining unit 12, the light transmissibility obtaining unit 13, and the control unit 14) to be implemented in a computer. In practice, for example, the CPU 50 reads the computer program from the ROM 52 and runs it such that the computer program is loaded in a main memory (such as the RAM 51). As a result, the module for each of the abovementioned constituent elements is generated in the main memory.

Second embodiment

Given below is the explanation of a second embodiment. In the first embodiment and the modification example of the first embodiment, the explanation is given for a case in which the luminaire 1 includes the light source unit 21 of a single type. However, that is not the only possible case. Alternatively, the luminaire can be configured to include the light source unit 21 of a plurality of types having mutually different spectral characteristics.

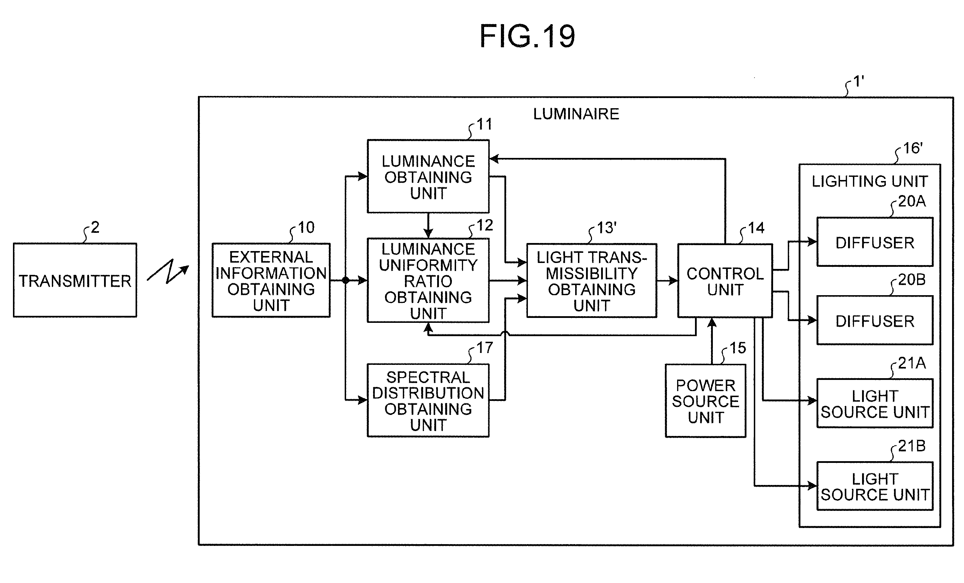

FIG. 19 is a diagram illustrating an exemplary configuration of a luminaire 1' according to the second embodiment. In FIG. 19, the constituent elements identical to the constituent elements illustrated in FIG. 4 are referred to by the same reference numerals, and the detailed explanation thereof is not repeated.

As compared to the luminaire 1 illustrated in FIG. 1, the luminaire 1' illustrated in FIG. 19 additionally includes a spectral distribution obtaining unit 17 and a light source unit 21B. More particularly, the lighting unit 16' includes the diffusers 20A and 20B as well as includes light source units 21A and 21B. Herein, it is assumed that the light emitted from the light source unit 21A is thrown out through the diffuser 20A, while the light emitted from the light source unit 21B is thrown out through the diffuser 20B.

The light source unit 21B has different spectral characteristics than the spectral characteristics of the light source unit 21A. The spectral distribution obtaining unit 17 refers to the position information obtained by the external information obtaining unit 10 and refers to the spectral distribution characteristics of each of the light source units 21A and 21B, and accordingly obtains the spectral distribution of the light coming from the light source unit 21A at the position specified in the position information as well as obtains the spectral distribution of the light coming from the light source unit 21B at the position specified in the position information. Meanwhile, the position-by-position spectral distribution characteristics of each of the light source units 21A and 21B are, for example, measured in advance and stored in a ROM.

Regarding each of the light source units 21A and 21B, the luminance obtaining unit 11 obtains the luminance value at the position specified in the position information and the luminance uniformity ratio obtaining unit 12 obtains the luminance uniformity ratio. Then, a light transmissibility obtaining unit 13' receives, from the luminance obtaining unit 11, the luminance value of each of the light source units 21A and 21B at the position specified in the position information; as well as receives, from the luminance uniformity ratio obtaining unit 12, the luminance uniformity ratio of each of the light source units 21A and 21B. Moreover, from the spectral distribution obtaining unit 17, the light transmissibility obtaining unit 13' receives the spectral characteristics of each of the light source units 21A and 21B at the position specified in the position information.

Then, according to the luminance value, the luminance uniformity ratio, and the spectral distribution of each of the light source units 21A and 21B; the light transmissibility obtaining unit 13' obtains the light transmissibility of each of the diffusers 20A and 20B as well as obtains the output of each of the light source units 21A and 21B. Subsequently, according to the light transmissibility of each of the diffusers 20A and 20B as obtained by the light transmissibility obtaining unit 13', the control unit 14 determines the current value of the current to be supplied from the power source unit 15 to the diffusers 20A and 20B. In an identical manner, according to the output of each of the light source units 21A and 21B as obtained by the light transmissibility obtaining unit 13', the control unit 14 determines the current value of the current to be supplied from the power source unit 15 to the light source units 21A and 21B.

In this way, in the luminaire 1' according to the second embodiment, the light transmissibility of the diffusers and the output of the light source units is controlled by further making use of the spectral distribution of a plurality of light sources. As a result, in the luminaire 1', it becomes possible to perform control of the luminance uniformity ratio and the luminance value according to the type of each of a plurality of light sources. Thus, the control can be performed in a more detailed manner.

According to a general method embodiment, a luminaire (1) control method may comprise:

position-information-obtaining (S10, S20) that includes obtaining position information which at least indicates the position of a person;

luminance-obtaining (S11) that includes obtaining the luminance of a luminous part at the position specified in the position information;

calculating (S14, S21) a luminance uniformity ratio indicating the uniformity in the luminance distribution in the luminous part at the position specified in the position information, the luminance uniformity ratio being calculated according to the light transmissibility and the luminance of the luminous part; and

controlling (S17, S26) that including controlling the light transmissibility and varying light output of a light source (21, 21A, 21B) according to the luminance and the luminance uniformity ratio.

The method as just described can be such that the position-information-obtaining (S10, S20) includes obtaining the position information according to the output of a motion sensor (2B) that detects the whereabouts of the person.

One of the methods as just described can furthermore be such that the controlling (S17, S26) includes varying light output of the light source (21A) and a second light source (21B), having different spectral characteristics from the light source (21A), according to the spectral characteristics of the light source (21A) and the second light source (21B) respectively.

One of the methods as just described can furthermore be such that a diffuser (20A, 20B) is divided into a plurality of areas (231, 232, 233, 234, 235, 236, 237, 238, 239, 2310), and the controlling (S17, S26) includes varying the light transmissibility for each of the plurality of areas (231, 232, 233, 234, 235, 236, 237, 238, 239, 2310) of the diffuser (20A, 20B).

One of the methods as just described can furthermore be such that the luminance-obtaining (S11) includes obtaining the luminance based on luminous intensity distribution that is stored in a luminous intensity distribution storing unit (52) and that corresponds to the position specified in the position information, the luminous intensity distribution storing unit (52) storing in advance position-by-position luminous intensity distribution received from the light source (21, 21A, 21B).

One of the methods as just described can furthermore be such that the calculating (S14, S21) includes obtaining the luminance uniformity ratio from a luminance uniformity ratio storing unit (52) according to the position specified in the position information and according to the light transmissibility, the luminance uniformity ratio storing unit (52) storing a luminance uniformity ratio corresponding to the position received from the light source (21, 21A, 21B) and corresponding to the light transmissibility.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A luminaire (1) comprising:

a light source (21, 21A, 21B) emitting light;

a diffuser (20A, 20B) diffusing the light emitted from the light source(21, 21A, 21B) according to light transmissibility;

a position information obtaining unit (10) obtaining position information which at least indicates the position of a person;

a luminance obtaining unit (11) obtaining the luminance of a luminous part at the position specified in the position information;

a calculator (12) calculating a luminance uniformity ratio indicating the uniformity in the luminance distribution in the luminous part at the position specified in the position information, the luminance uniformity ratio being calculated according to the light transmissibility and the luminance of the luminous part; and

a controller (14) controlling the light transmissibility and varying light output of the light source (21, 21A, 21B) according to the luminance and the luminance uniformity ratio.

2. The luminaire (1) according to claim 1, wherein
the luminance obtaining unit (11) obtains the luminance on an area-by-area basis in the luminous part, and
the calculator (12) calculating the luminance uniformity ratio at the position specified in the position information according to the light transmissibility and the area-by-area luminance in the luminous part.

3. The luminaire (1) according to claim 1 or 2, wherein
the controller (14) varies the light transmissibility and the light output of the light source (21, 21A, 21B) in such a way that the luminance uniformity ratio changes while the average luminance in the luminous part is maintained.

4. The luminaire (1) according to any one of claims 1 to 3, wherein the position information obtaining unit (10) obtains the position information that is sent by a transmitter (2, 2A, 2B).

5. The luminaire (1) according to claim 1, wherein
the position information obtaining unit (10) further obtains information that indicates sensitivity to glare and that is sent by a transmitter (2, 2A), and
the controller (14) varies the light transmissibility and the light output of the light source according to the luminance, the luminance uniformity ratio, and the information indicating sensitivity to glare.

6. The luminaire (1) according to any one of claims 1 to 3, wherein
the position information obtaining unit (10) obtains the position information according to the output of a motion sensor (2B) that detects the whereabouts of the person.

7. The luminaire (1) according to any one of claims 1 to 6, further comprising a second light source (21B) having different spectral characteristics from spectral characteristics the light source (21A),
wherein the controller (14) varies light output of the light source (21A) and the second light source (21B) according to the spectral characteristics of the light source (21A) and the second light source (21B) respectively.

8. The luminaire (1) according to any one of claims 1 to 7, wherein
the diffuser (20A, 20B) is divided into a plurality of areas ($23_1$, $23_2$, $23_3$, $23_4$, $23_5$, $23_6$, $23_7$, $23_8$, $23_9$, $23_{10}$), and
the controller (14) varies the light transmissibility for each of the plurality of areas ($23_1$, $23_2$, $23_3$, $23_4$, $23_5$, $23_6$, $23_7$, $23_8$, $23_9$, $23_{10}$) of the diffuser (20A, 20B).

9. The luminaire according to any one of claims 1 to 8, further comprising a luminous intensity distribution storing unit (52) storing position-by-position luminous intensity distribution received from the light source unit (21, 21A, 21B), wherein
the luminance obtaining unit (11) obtains the luminance based on the luminous intensity distribution that is stored in the luminous intensity distribution storing unit (52) and that corresponds to the position specified in the position information.

10. The luminaire according to any one of claims 1 to 9, further comprising a luminance uniformity ratio storing unit (52) storing a luminance uniformity ratio corresponding to the position received from the light source and corresponding to the light transmissibility, wherein
the calculator (12) obtains the luminance uniformity ratio from the luminance uniformity ratio storing unit (52) according to the position specified in the position information and according to the light transmissibility.

11. A luminaire (1) control method comprising:

position-information-obtaining (S10, S20) that includes obtaining position information which at least indicates the position of a person;
luminance-obtaining (S11) that includes obtaining the luminance of a luminous part at the position specified in the position information;
calculating (S14, S21) a luminance uniformity ratio indicating the uniformity in the luminance distribution in the luminous part at the position specified in the position information, the luminance uniformity ratio being calculated according to the light transmissibility and the luminance of the luminous part; and
controlling (S17, S26) that including controlling the light transmissibility and varying light output of a light source (21, 21A, 21B) according to the luminance and the luminance uniformity ratio.

12. The method according to claim 11, wherein
the luminance-obtaining (S11) includes obtaining the luminance on an area-by-area basis in the luminous part, and
the calculating (S14, S21) includes calculating the luminance uniformity ratio at the position specified in the position information according to the light transmissibility and the area-by-area luminance in the luminous part.

13. The method according to claim 11 or 12, wherein
the controlling (S17, S26) includes controlling varies the light transmissibility and the light output of the light source (21, 21A, 21B) in such a way that the luminance uniformity ratio changes while the average luminance in the luminous part is maintained.

14. The method according to any one of claims 11 to 3, wherein
the position-information-obtaining (S10, S20) includes obtaining the position information that is sent by a transmitter (2, 2A, 2B).

15. The method according to claim 11, wherein
the position-information-obtaining (S10, S20) further includes obtaining information that indicates sensitivity to glare and that is sent by a transmitter (2, 2A), and
the controlling (S17, S26) includes varying the light transmissibility and the light output of the light source (21, 21A, 21B) according to the luminance, the luminance uniformity ratio, and the information indicating sensitivity to glare.

## FIG.1A

## FIG.1B

## FIG.2

EP 2 779 792 A1

# FIG.3A

# FIG.3B

17

# FIG.4

EP 2 779 792 A1

# FIG.5

# FIG.6

| CURRENT VALUE SUPPLIED TO DIFFUSERS [A] | LIGHT TRANSMISSIBILITY OF DIFFUSERS [%] |
|---|---|
| 0 | 100 |
| 0.1 | 80 |
| 0.3 | 60 |
| 0.5 | 40 |
| 0.7 | 20 |
| 0.9 | 0 |

# FIG.7

```
           ┌──────────────┐
           │    START     │
           └──────────────┘
                  │
                  ▼
  ┌────────────────────────────────┐
  │  OBTAIN POSITION INFORMATION    │
  │   OF TARGET PERSON FOR          │──S10
  │      LIGHTING CONTROL           │
  └────────────────────────────────┘
                  │
                  ▼
  ┌────────────────────────────────┐
  │   OBTAIN LUMINANCE VALUE AT     │
  │  POSITION OF TARGET PERSON      │──S11
  │     FOR LIGHTING CONTROL        │
  └────────────────────────────────┘
                  │
                  ▼
  ┌────────────────────────────────┐
  │   EVALUATE LUMINANCE VALUE      │──S12
  └────────────────────────────────┘
                  │
                  ▼
  ┌────────────────────────────────┐
  │  OBTAIN LUMINANCE VALUE BASED   │──S13
  │          ON EVALUATION          │
  └────────────────────────────────┘
                  │
                  ▼
  ┌────────────────────────────────┐
  │  OBTAIN LUMINANCE UNIFORMITY    │──S14
  │            RATIO                │
  └────────────────────────────────┘
                  │
                  ▼
  ┌────────────────────────────────┐
  │     EVALUATE LUMINANCE          │──S15
  │      UNIFORMITY RATIO           │
  └────────────────────────────────┘
                  │
                  ▼
  ┌────────────────────────────────┐
  │  ADJUST LUMINANCE UNIFORMITY    │
  │    RATIO BY VARYING LIGHT       │──S16
  │ TRANSMISSIBILITY OF DIFFUSERS   │
  └────────────────────────────────┘
                  │
                  ▼
  ┌────────────────────────────────┐
  │  ADJUST LUMINANCE VALUE OF      │──S17
  │      LIGHT SOURCE UNIT          │
  └────────────────────────────────┘
                  │
                  ▼
           ┌──────────────┐
           │     END      │
           └──────────────┘
```

# FIG.8

VERTICAL ANGLE – LUMINANCE LIMIT VALUE

| VERTICAL ANGLE [°] | | 0° | 10° | 20° | 30° | 40° | 50° | 60° | 70° | 80° | 90° |
|---|---|---|---|---|---|---|---|---|---|---|---|
| QUALITY CLASS | A | | | | | | | | | | |
| | B | | | | | | | | | | |
| | C | | | | | | | | | | |
| | D | | | | | | | | | | |
| | E | | | | | | | | | | |

# FIG.9

CURRENT VALUE – TOTAL LUMINOUS FLUX

| CURRENT VALUE [A] SUPPLIED TO LIGHT SOURCE | | 0.1 | 0.2 | 0.3 | 0.4 | 0.5 | 0.6 | 0.7 | 0.8 | 0.9 | 1 |
|---|---|---|---|---|---|---|---|---|---|---|---|
| LIGHT TRANS-MISSIBILITY OF DIFFUSERS [%] | 100 | | | | | | | | | | |
| | 80 | | | | | | | | | | |
| | 60 | | | | | | | | | | |
| | 40 | | | | | | | | | | |
| | 20 | | | | | | | | | | |
| | 0 | | | | | | | | | | |

# FIG.10A

CURRENT VALUE – LUMINANCE UNIFORMITY RATIO
(100% LIGHT TRANSMISSIBILITY)

| VERTICAL ANGLE [°] | | 0° | 10° | 20° | 30° | 40° | 50° | 60° | 70° | 80° | 90° |
|---|---|---|---|---|---|---|---|---|---|---|---|
| CURRENT VALUE SUPPLIED TO DIFFUSERS [A] | 0.1 | | | | | | | | | | |
| | 0.2 | | | | | | | | | | |
| | 0.3 | | | | | | | | | | |
| | 0.4 | | | | | | | | | | |
| | 0.5 | | | | | | | | | | |
| | 0.6 | | | | | | | | | | |
| | 0.7 | | | | | | | | | | |
| | 0.8 | | | | | | | | | | |
| | 0.9 | | | | | | | | | | |
| | 1 | | | | | | | | | | |

# FIG.10B

CURRENT VALUE – LUMINANCE UNIFORMITY RATIO
(80% LIGHT TRANSMISSIBILITY)

| VERTICAL ANGLE [°] | | 0° | 10° | 20° | 30° | 40° | 50° | 60° | 70° | 80° | 90° |
|---|---|---|---|---|---|---|---|---|---|---|---|
| CURRENT VALUE SUPPLIED TO DIFFUSERS [A] | 0.1 | | | | | | | | | | |
| | 0.2 | | | | | | | | | | |
| | 0.3 | | | | | | | | | | |
| | 0.4 | | | | | | | | | | |
| | 0.5 | | | | | | | | | | |
| | 0.6 | | | | | | | | | | |
| | 0.7 | | | | | | | | | | |
| | 0.8 | | | | | | | | | | |
| | 0.9 | | | | | | | | | | |
| | 1 | | | | | | | | | | |

# FIG.11

LUMINANCE UNIFORMITY RATIO LIMIT VALUE

| VERTICAL ANGLE [°] | | 0° | 10° | 20° | 30° | 40° | 50° | 60° | 70° | 80° | 90° |
|---|---|---|---|---|---|---|---|---|---|---|---|
| QUALITY CLASS | A | | | | | | | | | | |
| | B | | | | | | | | | | |
| | C | | | | | | | | | | |
| | D | | | | | | | | | | |
| | E | | | | | | | | | | |

# FIG.12

```
          ┌─────────────┐
          │    START    │
          └─────────────┘
                 │
                 ▼
┌───────────────────────────────┐
│  OBTAIN POSITION INFORMATION   │
│    OF TARGET PERSON FOR        │──S20
│      LIGHTING CONTROL          │
└───────────────────────────────┘
                 │
                 ▼
┌───────────────────────────────┐
│  OBTAIN LUMINANCE UNIFORMITY   │
│            RATIO               │──S21
└───────────────────────────────┘
                 │
                 ▼
┌───────────────────────────────┐
│      EVALUATE LUMINANCE        │
│       UNIFORMITY RATIO         │──S22
└───────────────────────────────┘
                 │
                 ▼
┌───────────────────────────────┐
│  ADJUST LUMINANCE UNIFORMITY   │
│    RATIO BY VARYING LIGHT      │──S23
│  TRANSMISSIBILITY OF DIFFUSERS │
└───────────────────────────────┘
                 │
                 ▼
┌───────────────────────────────┐
│  OBTAIN LUMINANCE VALUE AT     │
│  POSITION OF TARGET PERSON     │──S24
│     FOR LIGHTING CONTROL       │
└───────────────────────────────┘
                 │
                 ▼
┌───────────────────────────────┐
│    EVALUATE LUMINANCE VALUE    │──S25
└───────────────────────────────┘
                 │
                 ▼
┌───────────────────────────────┐
│   ADJUST LUMINANCE VALUE OF    │──S26
│       LIGHT SOURCE UNIT        │
└───────────────────────────────┘
                 │
                 ▼
          ┌─────────────┐
          │     END     │
          └─────────────┘
```

# FIG.13

(a)

$22_1$  $22_2$  $22_3$  $22_4$  $22_5$  16

21  20A

(b)

$22_1$  $22_2$  $22_3$  $22_4$  $22_5$  16

21  20A

# FIG.14

POWER
CONSUMPTION

$W_1$

$W_0$

ta  tb  ta  tb  TIME

# FIG.15

(a)

$22_1$ $22_2$ $22_3$ $22_4$ $22_5$ 16

21

20A

(b)

$22_1$ $22_2$ $22_3$ $22_4$ $22_5$ 16

21

20A

# FIG.16

POWER
CONSUMPTION

$W_1$

TIME

# FIG.17

(a)

(b)

# FIG.18

# FIG.19

EP 2 779 792 A1

Europäisches
Patentamt
European
Patent Office
Office européen
des brevets

**EUROPEAN SEARCH REPORT**

Application Number

EP 13 18 1017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H06 68708 A (MATSUSHITA ELECTRIC IND CO LTD) 11 March 1994 (1994-03-11) * the whole document * * abstract * | 1-15 | INV. H05B33/08 F21V9/10 G01J1/42 H05B37/02 |
| X | JP 2009 048955 A (SHARP KK) 5 March 2009 (2009-03-05) * the whole document * * abstract * | 1-15 | |
| A | EP 2 565 604 A2 (TOSHIBA KK [JP]) 6 March 2013 (2013-03-06) * the whole document * | 1-15 | |
| A | US 2011/193484 A1 (HARBERS GERARD [US] ET AL) 11 August 2011 (2011-08-11) * abstract; figures 4,14 * | 1-15 | |

| | | TECHNICAL FIELDS SEARCHED (IPC) |
|---|---|---|
| | | H05B F21V G01J |

The present search report has been drawn up for all claims

| Place of search | Date of completion of the search | Examiner |
|---|---|---|
| The Hague | 20 June 2014 | João Carlos Silva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 18 1017

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2014

| Patent document cited in search report | | Publication date | Patent family member(s) | | Publication date |
|---|---|---|---|---|---|
| JP H0668708 | A | 11-03-1994 | NONE | | |
| JP 2009048955 | A | 05-03-2009 | NONE | | |
| EP 2565604 | A2 | 06-03-2013 | CN | 102967442 A | 13-03-2013 |
| | | | EP | 2565604 A2 | 06-03-2013 |
| | | | JP | 2013051188 A | 14-03-2013 |
| | | | US | 2013054197 A1 | 28-02-2013 |
| US 2011193484 | A1 | 11-08-2011 | CA | 2797486 A1 | 10-11-2011 |
| | | | CN | 102893701 A | 23-01-2013 |
| | | | EP | 2567595 A2 | 13-03-2013 |
| | | | JP | 2013528904 A | 11-07-2013 |
| | | | KR | 20130066609 A | 20-06-2013 |
| | | | TW | 201212709 A | 16-03-2012 |
| | | | US | 2011193484 A1 | 11-08-2011 |
| | | | US | 2011193499 A1 | 11-08-2011 |
| | | | US | 2013314004 A1 | 28-11-2013 |
| | | | WO | 2011139548 A2 | 10-11-2011 |

EPO FORM P0459

For more details about this annex : see Official Journal of the European Patent Office, No. 12/82